# EUROPEAN PATENT APPLICATION

(11) **EP 4 600 074 A1**
(43) Date of publication of application: **13.08.2025**
(21) Application number: 25154171.0
(22) Date of filing: 27.01.2025
(51) Int. Cl.: B60L 15/02, B60L 53/24, B60L 58/25, B60L 58/27, H02P 29/62, B60K 1/00

(54) **DRIVING APPARATUS**

(30) Priority: 09.02.2024 JP 2024018952
(71) Applicant: TOYOTA JIDOSHA KABUSHIKI KAISHA, Aichi-ken, 471-8571 (JP)
(72) Inventor: KAWANISHI, Hiroshi, Toyota-shi, 471-8571 (JP); OKUDA, Koichi, Toyota-shi, 471-8571 (JP)
(74) Representative: Kuhnen & Wacker Patent- und Rechtsanwaltsbüro PartG mbB

(57) **Abstract**

A driving apparatus (20) to be mounted on a vehicle (10) includes a first electric motor (30L) that includes multi-phase coils (35U, 35V, 35W) and rotates a driving wheel of the vehicle (10), a rotation inhibiting device (70) that inhibits rotation of the driving wheel caused by the first electric motor (30L), and a processor (90) that controls an electric current to be passed through the first electric motor (30L). The processor (90) executes a temperature raising process (S24) to raise temperatures of the multi-phase coils (35U, 35V, 35W) of the first electric motor (30L) by passing the electric current to the multi-phase coils (35U, 35V, 35W). The rotation inhibiting device (70) inhibits the rotation of the driving wheel and a q-axis electric current is included in the electric current passed through the multi-phase coils (35U, 35V, 35W) in the temperature raising process (S24).

## Description

### BACKGROUND OF THE INVENTION

### 1. Field of the Invention

The present disclosure relates to a driving apparatus. In particular, the present disclosure relates to a driving apparatus including an electric motor having multi-phase coils.

### 2. Description of Related Art

Japanese Unexamined Patent Application Publication No. 2009-118659 discloses a vehicle including a motor generator having three-phase coils.

### SUMMARY OF THE INVENTION

In the motor generator as disclosed in JP 2009-118659 A, the temperatures of the coils may be raised. However, if there is a temperature difference between the coils of the respective phases when the temperatures of the multi-phase coils are raised, the motor generator may not be able to exhibit intended magnetic characteristics. The present disclosure provides a technique that can, when the temperatures of multi-phase coils of an electric motor are raised, reduce the temperature difference between the coils of the respective phases.

According to an aspect of the present disclosure, a driving apparatus to be mounted on a vehicle includes a first electric motor that includes multi-phase coils and is configured to rotate a driving wheel of the vehicle, a rotation inhibiting device configured to inhibit rotation of the driving wheel caused by the first electric moto, and a processor configured to control an electric current to be passed through the first electric motor. The processor is configured to execute a temperature raising process to raise temperatures of the multi-phase coils of the first electric motor by passing the electric current to the multi-phase coils. The rotation inhibiting device inhibits the rotation of the driving wheel and a q-axis electric current is included in the electric current passed through the multi-phase coils in the temperature raising process.

In the driving apparatus described above, the electric current including the q-axis electric current is passed through the multi-phase coils of the first electric motor with the rotation inhibiting device inhibiting the rotation of the driving wheel. Accordingly, even when the q-axis electric current causes the first electric motor to generate torque, it is possible to cause the multi-phase coils to generate heat while restraining the driving wheel from rotating. Since the passage of the q-axis electric current is allowed, it is possible to raise the temperature of each of the multi-phase coils of the first electric motor regardless of the rotation position of the rotor. This makes it possible to reduce the temperature difference between the coils of the respective phases when the temperatures of the multi-phase coils are raised.

In addition, for example, a comparative example in which the temperatures of the multi-phase coils of the first electric motor are raised by passing an electric current including only a d-axis electric current through the multi-phase coils of the first electric motor is assumed. The comparative example makes it possible to raise the temperatures of the multi-phase coils of the first electric motor while restraining the generation of torque in the first electric motor. However, in the comparative example, electric currents of different magnitudes may be continuously passed through the multi-phase coils. In this case, the amount of electric current to be passed may differ between the multi-phase coils. As a result, the amounts of heat generated in the multi-phase coils may not be equalized, and a temperature difference may occur between the multi-phase coils. When the temperature difference occurs between the multi-phase coils, the first electric motor may not be able to exhibit the intended magnetic characteristics. In the driving apparatus of the present disclosure, since the electric current including the q-axis electric current is passed through the multi-phase coils of the first electric motor, the magnitudes of the electric currents passed through the multi-phase coils can be made more uniform than in the comparative example. This makes it possible to appropriately raise the temperature of each of the multi-phase coils of the first electric motor.

Details of the present disclosure will be described below.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows a block diagram of an electrified vehicle 10 including a driving apparatus 20 of a first embodiment;
FIG. 2 shows a sectional view taken along line II-II of FIG. 1;
FIG. 3 shows a circuit diagram of the driving apparatus 20; and
FIG. 4 shows a flowchart of a process executed by a control device 90 of the driving apparatus 20.

### DETAILED DESCRIPTION OF EMBODIMENTS

The multi-phase coils may be three-phase coils. However, in another embodiment, the multi-phase coils may be two-phase coils.

The rotation inhibiting device may include a lock component configured to mechanically lock an axle connected to the driving wheel.

With such a configuration, the temperature raising process can be executed with the rotation of the driving wheel reliably inhibited by the lock component.

The processor may execute the temperature raising process while traveling of the vehicle is stopped.

With such a configuration, since the rotation inhibiting device inhibits the rotation of the driving wheel while the traveling of the vehicle is stopped, the temperature raising process can be executed without affecting the traveling of the vehicle.

The driving apparatus may further include a second electric motor that includes multi-phase coils and rotates a driving wheel of the vehicle. However, in another embodiment, the driving apparatus does not have to include the second electric motor. Note that the second electric motor may drive the driving wheel that is the same as the driving wheel driven by the first electric motor, or may drive the driving wheel that differs from the driving wheel driven by the first electric motor.

The first electric motor and the second electric motor may rotate a common drive shaft. However, in another embodiment, for example, the first electric motor may rotate a drive shaft connected to a front wheel of the vehicle and the second electric motor may rotate a drive shaft connected to a rear wheel of the vehicle. That is, the first electric motor and the second electric motor may rotate different drive shafts.

The driving apparatus may further include a second electric power conversion device electrically connected to the second electric motor. In this case, the second electric motor and the second electric power conversion device may constitute a charging circuit configured to supply electric power of an external power source to a battery of the vehicle through a neutral point of the second electric motor, and the processor may be configured to execute the temperature raising process in accordance with charging of the battery through the charging circuit.

When the charging circuit executes charging of the battery, the temperature of the second electric motor rises. With such a configuration, since the temperature of the first electric motor is raised by the temperature raising process in accordance with the charging of the battery through the charging circuit, the temperature difference between the second electric motor and the first electric motor can be reduced.

The processor may be configured to execute the temperature raising process in at least a part of a charging period in which the battery is charged by the charging circuit.

The temperature of the second electric motor rises during the charging period in which the battery is charged by the charging circuit. With such a configuration, since the temperature of the first electric motor is raised by the temperature raising process in at least a part of the charging period of the battery, the temperature difference between the second electric motor and the first electric motor can be reduced.

The processor may be configured to determine timing to start the execution of the temperature raising process in accordance with a scheduled start-of-use time of the vehicle.

For example, when the temperature raising process is started regardless of the start-of-use time, the temperature raising process may be executed for an unnecessarily long time, and an excessive electric current may be passed through the multi-phase coils. With such a configuration, it is possible to restrain an excessive electric current from being passed through the multi-phase coils. Thus, the temperature raising process can be executed in an energy-efficient manner.

The processor may be configured to determine timing to finish the execution of the temperature raising process in accordance with a scheduled start-of-use time of the vehicle.

For example, when the temperature raising process is finished regardless of the start-of-use time, the temperature raising process may be executed for an unnecessarily long time, and an excessive electric current may be passed through the multi-phase coils. With such a configuration, it is possible to restrain an excessive electric current from being passed through the multi-phase coils. Thus, the temperature raising process can be executed in an energy-efficient manner.

The processor may be configured to change the magnitude of the electric current to be passed through the multi-phase coils of the first electric motor in accordance with a temperature difference between the first electric motor and the second electric motor.

With such a configuration, for example, when the temperature difference between the first electric motor and the second electric motor is small, the magnitude of the electric current to be passed through the multi-phase coils can be reduced. Thus, the temperature raising process can be executed in an energy-efficient manner.

The vehicle may further include a heating medium circuit configured to circulate a heating medium. In this case, the heating medium circuit may circulate the heating medium at least between the first electric motor and a battery of the vehicle in the temperature raising process.

With such a configuration, the temperature of the battery of the vehicle can be raised using heat of the first electric motor generated by the temperature raising process.

### EMBODIMENT

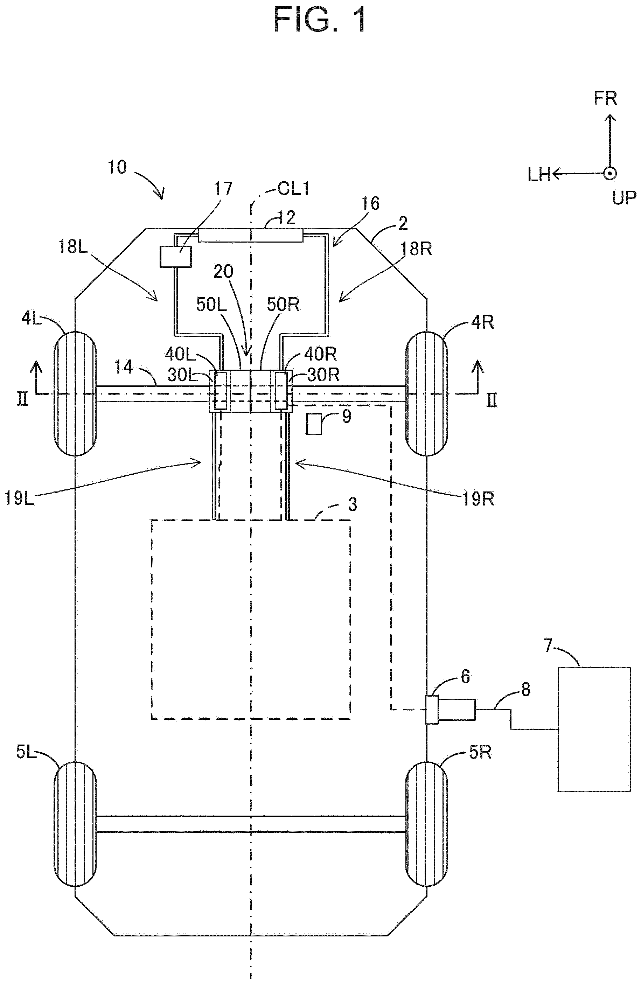

FIG. 1 shows a block diagram of an electrified vehicle 10 equipped with a driving apparatus 20 of a first embodiment viewed from above. In the present specification, the front side of the electrified vehicle 10 (that is, the upper side of the sheet of FIG. 1) may be simply referred to as "front", and the opposite side thereof may be simply referred to as "rear". Furthermore, the left side of the electrified vehicle 10 (that is, the left side of the sheet of FIG. 1) may be simply referred to as "left", and the opposite side thereof may be simply referred to as "right". In addition, the upper side of the electrified vehicle 10 (that is, the near side of the sheet of the FIG. 1) may be simply referred to as "up", and the opposite side thereof may be simply referred to as "down". Note that the "electrified vehicle" in the present specification includes, for example, a rechargeable battery electric vehicle that is charged by an external power source, a fuel cell electric vehicle that includes a fuel cell as a power source, and a hybrid electric vehicle that also includes an engine.

The electrified vehicle 10 further includes, in addition to the driving apparatus 20, a vehicle body 2, a battery pack 3, a pair of left and right front wheels 4L, 4R, a pair of left and right rear wheels 5L, 5R, a charging inlet 6, a parking brake 9, a radiator 12, and a radiator heat circuit 16. The driving apparatus 20 includes a first electric motor 30L, a second electric motor 30R, a first inverter 40L, a second inverter 40R, a first power transmission mechanism 50L, and a second power transmission mechanism 50R. In the following description, "a pair of left and right" may be simply referred to as "a pair".

The driving apparatus 20 drives the pair of front wheels 4L, 4R by supplying electric power of the battery pack 3 to each of the electric motors 30L, 30R. Accordingly, the electrified vehicle 10 is driven. That is, the pair of front wheels 4L, 4R are driving wheels of the electrified vehicle 10. In a modification, the pair of rear wheels 5L, 5R may be the driving wheels of the electrified vehicle 10, or the pair of front wheels 4L, 4R and the pair of rear wheels 5L, 5R may be the driving wheels of the electrified vehicle 10.

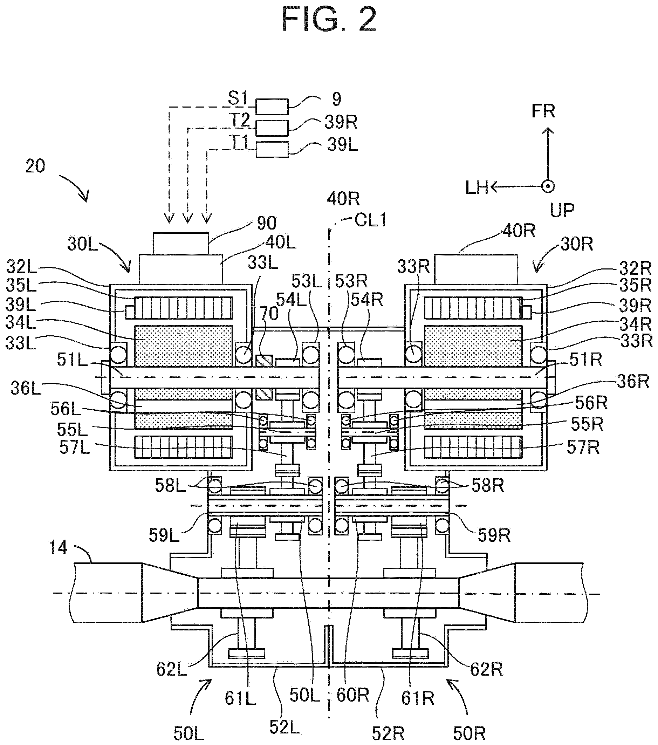

The first electric motor 30L and the second electric motor 30R are symmetrically disposed with respect to a center line C1 of the electrified vehicle 10 in the left-right direction and have the same structure as each other. The first electric motor 30L is located on the left of the center line C1, and the second electric motor 30R is located on the right of the center line C1. The first inverter 40L is disposed above the first electric motor 30L, and the second inverter 40R is disposed above the second electric motor 30R. The first electric motor 30L and the first inverter 40L are electrically connected to each other, and the second electric motor 30R and the second inverter 40R are electrically connected to each other. The power transmission mechanisms 50L, 50R are mechanically connected to the electric motors 30L, 30R, respectively. Details of the structure of each of the power transmission mechanisms 50L, 50R will be described further below with reference to FIG. 2.

The charging inlet 6 is disposed on a right side face of the vehicle body 2. The charging inlet 6 is configured to be connected to an external power source 7 (e.g., a charging station) through a power cable 8. When the charging inlet 6 is connected to the external power source 7, charging electric power of the external power source 7 is supplied to the battery pack 3.

The radiator 12 is disposed at a front end of the vehicle body 2 of the electrified vehicle 10. The radiator 12 is a device that exchanges heat between a heating medium (e.g., antifreeze or water) circulating through the radiator heat circuit 16 and outside air. The radiator 12 cools the heating medium, for example, using traveling wind that enters the inside of the vehicle body 2 when the electrified vehicle 10 is traveling. The heating medium functions as, for example, a coolant that cools each of the electric motors 30L, 30R when the electrified vehicle 10 is traveling. Although details will be described further below, the heating medium also functions as, for example, a heating medium that raises the temperature of the battery pack 3 under low temperatures.

The radiator heat circuit 16 includes a radiator pump 17, a first pipe 18L, a second pipe 19L, a third pipe 18R, and a fourth pipe 19R. The first pipe 18L connects the radiator 12 and the first electric motor 30L. The second pipe 19L connects the first electric motor 30L and the battery pack 3. Similarly, the third pipe 18R connects the radiator 12 and the second electric motor 30R, and the fourth pipe 19R connects the second electric motor 30R and the battery pack 3. The radiator pump 17 pressure-feeds the heating medium in the radiator heat circuit 16. In the present embodiment, the radiator pump 17 circulates the heating medium in the order of the first pipe 18L, the first electric motor 30L, the second pipe 19L, the battery pack 3, the third pipe 18R, the second electric motor 30R, the fourth pipe 19R, and then the radiator 12.

The detailed structure of the driving apparatus 20 will be described with reference to FIG. 2. In addition to each of the electric motors 30L, 30R, and the like described above, the driving apparatus 20 further includes a control device 90. The control device 90 is a computer including a CPU, and is, for example, configured to be communicable with each of the electric motors 30L, 30R, the parking brake 9, and the radiator pump 17 and controls the operation of these devices.

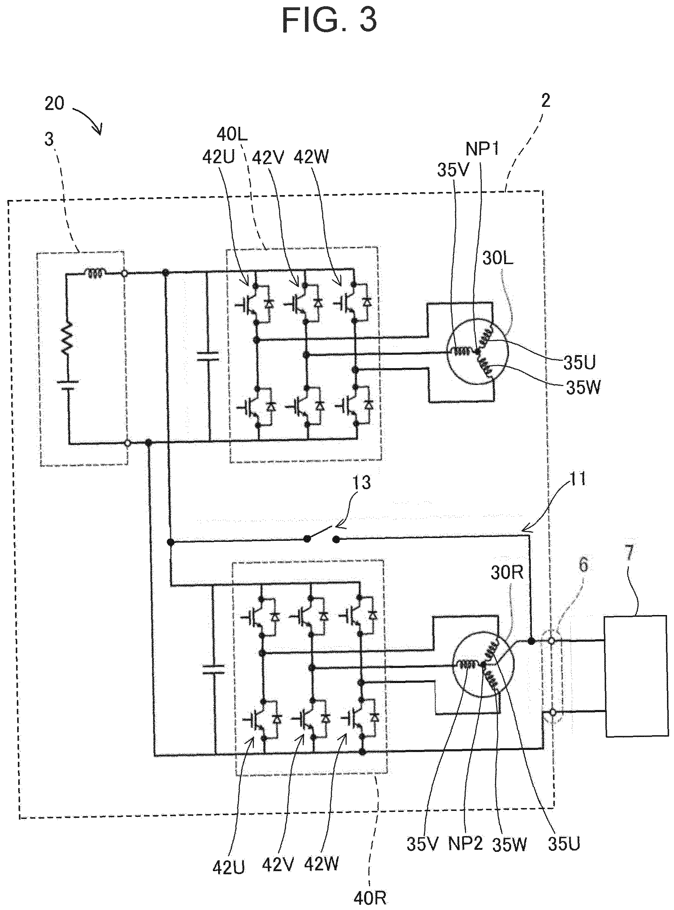

The first electric motor 30L of the driving apparatus 20 includes a first motor case 32L, a first motor bearing 33L, a first rotor 34L, a first stator 35L, and a first temperature sensor 39L. The first motor case 32L houses the first rotor 34L, the first stator 35L, and the first temperature sensor 39L. The first rotor 34L has a first permanent magnet 36L. The first stator 35L faces the first rotor 34L from the outside in the radial direction of the first rotor 34L. An outer periphery of the first stator 35L is covered with a U-phase coil 35U, a V-phase coil 35V, and a W-phase coil 35W (refer to FIG. 3). The coils 35U, 35V and 35W of the respective phases are arranged in the circumferential direction of the first stator 35L. The first temperature sensor 39L is fixed to a left end face of the first stator 35L. The first temperature sensor 39L detects a temperature T1 of the first electric motor 30L and transmits the detected temperature T1 to the control device 90. Note that, in a modification, the first temperature sensor 39L may be fixed to, for example, an inner wall of the first motor case 32L. The first motor bearing 33L is, for example, a ball bearing. The first motor bearing 33L rotates a first motor shaft 51L by rolling a ball along an inner race. Similarly, the other bearings are also ball bearings. In a modification, each bearing may be a roller bearing instead of a ball bearing.

As described above, the second electric motor 30R has the same configuration as the first electric motor 30L. Thus, as with the first electric motor 30L, the second electric motor 30R includes a second motor case 32R, a second motor bearing 33R, a second rotor 34R having a second permanent magnet 36R, a second stator 35R, and a second temperature sensor 39R. The second motor bearing 33R rotates a second motor shaft 51R. The second temperature sensor 39R detects a temperature T2 of the second electric motor 30R and transmits the detected temperature T2 to the control device 90.

The first power transmission mechanism 50L transmits the power of the first electric motor 30L to a drive shaft 14. The drive shaft 14 connects the pair of front wheels 4L, 4R to each other. The first power transmission mechanism 50L includes a plurality of bearings 53L, 56L, 58L, a plurality of gears 54L, 57L, 61L, 62L, and a plurality of shafts 55L, 59L. The first power transmission mechanism 50L, for example, reduces the rotation speed of the first electric motor 30L using the gears 54L, 57L, 61L, 62L to drive the drive shaft 14. In addition, the first power transmission mechanism 50L further includes a parking gear 70. The parking gear 70 meshes with a parking lock (not shown) in response to the parking brake 9 (refer to FIG. 1) being operated to stop the rotation of the first motor shaft 51L. That is, the parking gear 70 locks the drive shaft 14 connected to the front wheels 4L, 4R, thereby inhibiting the rotation of the front wheels 4L, 4R. The parking brake 9 transmits, to the control device 90, an ON signal S 1 indicating that the parking brake is in operation in response to the parking brake 9 being operated by a user.

The second power transmission mechanism 50R transmits the power of the second electric motor 30R to the drive shaft 14. The second power transmission mechanism 50R has a structure left-right symmetric to the structure of the first power transmission mechanism 50L described above. Thus, the second power transmission mechanism 50R includes a plurality of bearings 53R, 56R, 58R, a plurality of gears 54R, 57R, 61R, 62R, and a plurality of shafts 55R, 59R. The second power transmission mechanism 50R, for example, reduces the rotation speed of the second electric motor 30R using the gears 54R, 57R, 61R, 62R and the like to rotate the drive shaft 14.

As shown in FIG. 1, in the present embodiment, the drive shaft 14 connects the pair of front wheels 4L, 4R. Thus, the pair of front wheels 4L, 4R are driven by the two electric motors 30L, 30R. Note that, in a modification, the drive shaft 14 may be separated at the center of the electrified vehicle 10 in the left-right direction. That is, the pair of front wheels 4L, 4R may be independently driven by the electric motors 30L, 30R, respectively.

An electric circuit of the driving apparatus 20 will be described with reference to FIG. 3. The first electric motor 30L is a three-phase motor including the U-phase coil 35U, the V-phase coil 35V, and the W-phase coil 35W. One end of the U-phase coil 35U, one end of the V-phase coil 35V, and one end of the W-phase coil 35W are connected to a neutral point NP1. The other end of the U-phase coil 35U of the first electric motor 30L is connected to a U-phase arm 42U of the first inverter 40L. Similarly, the other end of the V-phase coil 35V of the first electric motor 30L is connected to a V-phase arm 42V of the first inverter 40L, and the other end of the W-phase coil 35W is connected to a W-phase arm 42W. In this manner, the first inverter 40L is electrically connected to the first electric motor 30L.

Similarly, the second electric motor 30R is also a three-phase motor. One end of the U-phase coil 35U, one end of the V-phase coil 35V, and one end of the W-phase coil 35W of the second electric motor 30R are connected to a neutral point NP2. The other end of the U-phase coil 35U of the second electric motor 30R is connected to a U-phase arm 42U of the second inverter 40R. Similarly, the other end of the V-phase coil 35V of the second electric motor 30R is connected to a V-phase arm 42V of the second inverter 40R, and the other end of the W-phase coil 35W is connected to a W-phase arm 42W. In this manner, the second inverter 40R is electrically connected to the second electric motor 30R.

As shown in FIG. 3, the driving apparatus 20 further includes a charging circuit 11. The charging circuit 11 is a circuit for supplying direct-current charging electric power supplied from the external power source 7 to the battery pack 3. In the charging circuit 11, one terminal of the charging inlet 6 is connected to a positive electrode of the battery pack 3 through the neutral point NP2 of the second electric motor 30R and the second inverter 40R. That is, the charging circuit 11 supplies the charging electric power supplied from the external power source 7 to the neutral point NP2 of the second electric motor 30R. In addition, the other terminal of the charging inlet 6 is connected to a negative electrode of the battery pack 3 through the second inverter 40R. The charging circuit 11 supplies the charging electric power to the battery pack 3 through the neutral point NP2 of the second electric motor 30R. This enables the second electric motor 30R and the second inverter 40R to function as three booster circuits that are connected in parallel between the charging inlet 6 and the battery pack 3. This enables the driving apparatus 20 to boost the output voltage of the external power source 7 using the second electric motor 30R and the second inverter 40R. Accordingly, even if the output voltage of the external power source 7 is lower than the voltage of the battery pack 3, rapid charging can be executed. In addition, the one terminal of the charging inlet 6 is directly connected to the positive electrode of the battery pack 3 through a switch 13. When the output voltage of the external power source 7 is substantially equal to the voltage of the battery pack 3, the charging circuit 11 can cause the output voltage of the external power source 7 to bypass the neutral point NP2 of the second electric motor 30R by turning on the switch 13. In addition, although not shown in the drawings, the charging circuit 11 further includes a charging unit including a relay, a capacitor, and the like. The charging unit is connected to the neutral point NP2 and the second inverter 40R.

Here, in the present embodiment, while the charging inlet 6 is connected to the external power source 7 and the charging electric power of the external power source 7 is supplied to the neutral point NP2 of the second electric motor 30R, an electric current flows in the coils 35U, 35V, 35W of the respective phases of the second electric motor 30R. As a result, the coils 35U, 35V, and 35W of the respective phases generate heat, and the temperature T2 of the second electric motor 30R rises. On the other hand, even when the charging inlet 6 is connected to the external power source 7, no electric current flows in the coils 35U, 35V, 35W of the respective phases of the first electric motor 30L, and the temperature T1 of the first electric motor 30L thus does not rise. Thus, while the charging electric power of the external power source 7 is supplied to the neutral point NP2 of the second electric motor 30R, the temperature difference between the electric motors 30L, 30R increases. In this case, the output torques of the electric motors 30L, 30R may become unbalanced, which may reduce the traveling stability of the electrified vehicle 10.

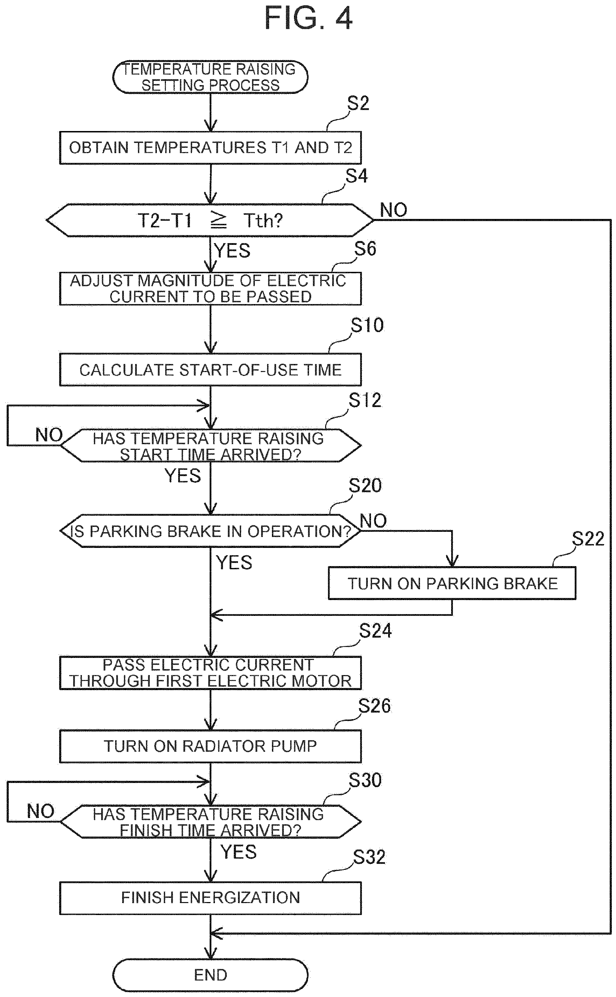

A temperature raising setting process executed by the control device 90 of the driving apparatus 20 will be described with reference to FIG. 4. The temperature raising setting process is a process for executing a temperature raising process to cause the coils 35U, 35V, 35W of the respective phases of the first electric motor 30L to generate heat by passing an electric current including a q-axis electric current through the coils 35U, 35V, 35W of the respective phases. The control device 90 starts the temperature raising setting process in response to the charging inlet 6 being connected to the external power source 7. That is, the control device 90 executes the temperature raising process in accordance with the charging of the battery pack 3 through the charging circuit 11. This makes it possible to restrain an increase in the temperature difference between the electric motors 30L, 30R caused by the charging of the battery pack 3.

In a temperature obtaining process S2, the control device 90 obtains the temperature T1 of the first electric motor 30L from the first temperature sensor 39L and obtains the temperature T2 of the second electric motor 30R from the second temperature sensor 39R.

In a temperature raising determination process S4, the control device 90 calculates a temperature difference T2 - T1 from the temperature T1 and the temperature T2 obtained in the temperature obtaining process S2, and compares the temperature difference with a threshold temperature difference Tth that is previously stored. Here, the threshold temperature difference Tth is a threshold for determining whether the temperature difference T2 - T1 causes a reduction in the stability of the driving apparatus 20 during driving. The threshold temperature difference Tth is determined based on the size and the output torque and the like of each of the electric motors 30L, 30R, but can be changed later by the user. When the temperature difference T2 - T1 is smaller than the threshold temperature difference Tth (NO in the temperature raising determination process S4), the output torques of the electric motors 30L, 30R are maintained relatively uniform even if the temperature raising process for the coils 35U, 35V, 35W of the respective phases of the first electric motor 30L is not executed. Thus, the driving apparatus 20 can be stably driven. When the control device 90 determines NO in the temperature raising determination process S4, the control device 90 finishes the process in FIG. 4. This makes it possible to restrain an unnecessary temperature raising process from being executed even though the temperature difference T2 - T1 is smaller than the threshold temperature difference Tth and the electric motors 30L, 30R can be driven in a well-balanced manner. On the other hand, when the temperature difference T2 - T1 is equal to or larger than the threshold temperature difference Tth (YES in the temperature raising determination process S4), the control device 90 determines that temperature raising process is necessary because the output torques of the electric motors 30L, 30R may become unbalanced and the stability of each of the electric motors 30L, 30R during driving may be reduced, and proceeds to an electric current adjusting process S6.

In the electric current adjusting process S6, the control device 90 adjusts the magnitude of the electric current to be passed through the coils 35U, 35V, 35W of the respective phases of the first electric motor 30L in the temperature raising process in accordance with the temperature difference T2 - T1 calculated in the temperature raising determination process S4. Specifically, the control device 90 calculates the value of the electric current to be passed by multiplying the temperature difference T2 - T1 by a predetermined conversion value. Thus, the value of the electric current to be passed increases as the temperature difference T2 - T1 increases. That is, the value of the electric current to be passed is proportional to the temperature difference T2 - T1. For example, when the temperature difference T2 - T1 is small, the magnitude of the electric current to be passed can be made smaller than that when the temperature difference T2 - T1 is large. This makes it possible to execute the temperature raising process in an energy-efficient manner. Hereinbelow, the electric current to be passed adjusted in the electric current adjusting process S6 may be referred to as the "adjusted electric current".

In a time calculating process S10, the control device 90 calculates a start-of-use time. The start-of-use time is the estimated time at which the charging of the battery pack 3 is completed and the electrified vehicle 10 starts traveling again after the charging of the battery pack 3 is started. The control device 90 stores, for example, a charging amount per unit time and an actual value of the time from the completion of charging to the start of traveling. Thus, the control device 90 first calculates a charging time required to complete charging based on the amount of electric power remaining in the battery pack 3 at the present point in time. The control device 90 calculates the start-of-use time by adding an estimated time from the completion of charging to the resumption of traveling to the calculated charging time. The estimated time from the completion of charging to the resumption of traveling may be, for example, the mean of actual values or the shortest actual value. In another modification, the estimated time may be any time input by the user.

In a first monitoring process S12, the control device 90 monitors the arrival of a temperature raising start time. The temperature raising start time is the time indicating the timing to start energizing the coils 35U, 35V, 35W of the respective phases of the first electric motor 30L. The temperature raising start time is determined in accordance with the start-of-use time calculated in the time calculating process S10 and the adjusted electric current calculated in the electric current adjusting process S6. Specifically, the temperature raising start time is calculated by subtracting the time required for the temperature to rise until the current temperature difference T2 - T1 becomes smaller than the threshold temperature difference Tth when the adjusted electric current is passed through the coils 35U, 35V, 35W of the respective phases of the first electric motor 30L from the start-of-use time calculated in the time calculating process S 10. For example, when the difference between the temperature difference T2 - T1 and the threshold temperature difference Tth is large, the temperature raising start time is set to a relatively early time. Thus, the temperature T1 rises relatively early, and the temperature difference T2 - T1 can be reliably made smaller than the threshold temperature difference Tth before the start-of-use time arrives.

On the other hand, when the difference between the temperature difference T2 - T1 and the threshold temperature difference Tth is small, the temperature raising start time is set to a time later than that when the difference between the temperature difference T2 - T1 and the threshold temperature difference Tth is large. The control device 90 repeats the first monitoring process S12 until the temperature raising start time arrives. This makes it possible to restrain the first electric motor 30L from being energized for an unnecessarily long time due to the temperature raising process starting before the temperature raising start time. In this manner, by determining the timing to start energizing the coils 35U, 35V, 35W of the respective phases of the first electric motor 30L corresponding to the start-of-use time of the electrified vehicle 10, the temperature of the first electric motor 30L can be raised in an energy-efficient manner. When the start-of-use time arrives, the control device 90 determines YES in the first monitoring process S12 and proceeds to a brake determination process S20.

In the brake determination process S20, the control device 90 determines whether the parking brake 9 is in operation. Specifically, the control device 90 determines whether the ON signal S 1 from the parking brake 9 is received. When the control device 90 does not receive the ON signal S 1 (NO in S20), the control device 90 proceeds to a brake operating process S22. When the control device 90 receives the ON signal S 1 (YES in S20), the control device 90 proceeds to an energization process S24.

In the brake operating process S22, the control device 90 turns on the parking brake 9 to operate the parking brake 9. This locks the drive shaft 14 and can restrain the electrified vehicle 10 from traveling during the temperature raising process. After the brake operating process 22 is finished, the control device 90 proceeds to the energization process S24.

In the energization process S24, the control device 90 passes the adjusted electric current calculated in the electric current adjusting process S6 through the first electric motor 30L. Accordingly, the coils 35U, 35V, 35W of the respective phases of the first electric motor 30L generate heat, and the temperature T1 of the first electric motor 30L rises.

Furthermore, in a pump operating process S26, the control device 90 turns on the radiator pump 17 to operate the radiator pump 17. Accordingly, the radiator pump 17 circulates the heating medium in the radiator heat circuit 16. As a result, for example, the heating medium circulates between the first electric motor 30L and the battery pack 3. This enables the heat generated in the coils 35U, 35V, 35W of the respective phases of the first electric motor 30L to be supplied to the battery pack 3 through the heating medium. As a result, it is possible to raise the temperature of the battery pack 3.

In a second monitoring process S30, the control device 90 monitors the arrival of a temperature raising finish time. The temperature raising finish time is the time indicating the timing to finish the energization of the coils 35U, 35V, 35W of the respective phases of the first electric motor 30L. The temperature raising finish time is the estimated time at which the temperature difference T2 - T1 becomes smaller than the threshold temperature difference Tth after the temperature raising start time arrives (YES in the first monitoring process S12) and the energization of the first electric motor 30L is started in the energization process S24, and determined in accordance with the start-of-use time calculated in the time calculating process S10. The control device 90 repeats the second monitoring process S30 until the temperature raising finish time arrives, and proceeds to an energization finishing process S32 when the temperature raising finish time arrives (YES in the second monitoring process S30).

In the energization finishing process S32, the control device 90 finishes the energization of the first electric motor 30L. In this manner, by finishing the energization at the temperature raising finish time corresponding to the temperature raising start time determined in accordance with the start-of-use time, it is possible to restrain the first electric motor 30L from being energized for an unnecessarily long time. When the energization finishing process S32 is finished, the control device 90 finishes the temperature raising setting process of FIG. 4.

### EFFECTS OF EMBODIMENT

In the driving apparatus 20 of the present embodiment, the electric current including the q-axis electric current is passed through the coils 35U, 35V, 35W of the respective phases of the first electric motor 30L with the parking gear 70 inhibiting the rotation of the pair of front wheels 4L, 4R (the energization process S24 in FIG. 4). Accordingly, even when the q-axis electric current causes the first electric motor 30L to generate torque, it is possible to cause the three-phase coils 35U, 35V, 35W to generate heat while restraining the pair of front wheels 4L, 4R from rotating. Since not only the passage of a d-axis electric current but also the passage of the q-axis electric current is allowed, it is possible to raise the temperature of each of the multi-phase coils 35U, 35V, 35W of the first electric motor 30L regardless of the rotation position of the first rotor 34L. This makes it possible to reduce the temperature difference between the coils 35U, 35V, 35W of the respective phases when the temperatures of the coils 35U, 35V, 35W of the respective phases are raised.

### CORRESPONDENCES

The parking gear 70 is an example of the "rotation inhibiting device" and the "lock component". The energization process S24 of FIG. 4 is an example of the "temperature raising process". The second inverter 40R is an example of the "second electric power conversion device".

Although the specific examples of the present disclosure have been described in detail above, these are merely examples and do not limit the scope of the claims. The technique described in the claims includes various modifications and changes of the specific examples illustrated above. Modifications of the embodiment will be listed below.

### FIRST MODIFICATION

Each of the first electric motor 30L and the second electric motor 30R may include two-phase coils. In another modification, each of the first electric motor 30L and the second electric motor 30R may include coils of four or more phases.

### SECOND MODIFICATION

The gear 62L of the first power transmission mechanism 50L may be configured to be disconnectable from the drive shaft 14. In this case, the control device 90 may disconnect the gear 62L and the drive shaft 14 instead of turning on the parking brake 9 in the brake operating process S22 of FIG. 4. This inhibits the rotation of the drive shaft 14. In this modification, the gear 62L is an example of the "rotation inhibiting device".

### THIRD MODIFICATION

The control device 90 does not have to execute the temperature raising setting process of FIG. 4 in response to the charging inlet 6 being connected to the external power source 7 as a trigger. The control device 90 may execute the process of FIG. 4, for example, in response to an instruction from the user. In this case, the control device 90 may execute the process of FIG. 4 while the electrified vehicle 10 is traveling.

### FOURTH MODIFICATION

The driving apparatus 20 does not have to include the second electric motor 30R. The driving apparatus 20 may include only the first electric motor 30L. In this case, the control device 90 may obtain the temperatures of the coils 35U, 35V, and 35W of the respective phases of the first electric motor 30L in the temperature obtaining process S2 of FIG. 4. In this modification, in the temperature raising determination process S4, the control device 90 may execute the temperature raising process when the temperature difference between the coils 35U, 35V, and 35W of the respective phases exceeds a threshold. In this case, in the electric current adjusting process S6, the control device 90 may adjust the magnitude of the electric current to be passed such that the coil of the phase having the lowest temperature generates heat most.

### FIFTH MODIFICATION

The second electric motor 30R and the second inverter 40R do not have to constitute the charging circuit 11. In this case, the control device 90 may execute the process of FIG. 4 on both the first electric motor 30L and the second electric motor 30R.

### SIXTH MODIFICATION

The control device 90 does not have to execute the time calculating process S10 and the first monitoring process S12 of FIG. 4. In this modification, for example, the energization of the first electric motor 30L may be started after an elapse of a predetermined time after the charging inlet 6 is connected to the external power source 7.

### SEVENTH MODIFICATION

The control device 90 does not have to execute the second monitoring process S30 of FIG. 4. In this modification, for example, the control device 90 may execute the energization finishing process S32 when the temperature difference T2 - T1 becomes smaller than the threshold temperature difference Tth.

### EIGHTH MODIFICATION

The control device 90 does not have to execute the pump operating process S26 of FIG. 4. In this case, the radiator heat circuit 16 of the electrified vehicle 10 does not have to include the second pipe 19L and the fourth pipe 19R.

The technical elements described in the present specification or the drawings exhibit technical usefulness alone or in various combinations, and are not limited to the combinations described in the claims at the time of filing the application. In addition, the technique illustrated in the present specification or the drawings can achieve multiple objectives simultaneously, and achieving one of the objectives itself has technical usefulness.

## Claims

1. A driving apparatus (20) to be mounted on a vehicle (10), the driving apparatus (20) comprising:
a first electric motor (30L) that includes multi-phase coils (35U, 35V, 35W) and is configured to rotate a driving wheel of the vehicle (10);
a rotation inhibiting device (70) configured to inhibit rotation of the driving wheel caused by the first electric motor (30L); and
a processor (90) configured to control an electric current to be passed through the first electric motor (30L), wherein
the processor (90) is configured to execute a temperature raising process (S24) to raise temperatures of the multi-phase coils (35U, 35V, 35W) of the first electric motor (30L) by passing the electric current to the multi-phase coils (35U, 35V, 35W), and
the rotation inhibiting device (70) inhibits the rotation of the driving wheel and a q-axis electric current is included in the electric current passed through the multi-phase coils (35U, 35V, 35W) in the temperature raising process (S24).

2. The driving apparatus (20) according to claim 1, wherein the multi-phase coils (35U, 35V, 35W) are three-phase coils (35U, 35V, 35W).

3. The driving apparatus (20) according to claim 1, wherein the rotation inhibiting device (70) includes a lock component (70) configured to mechanically lock an axle connected to the driving wheel.

4. The driving apparatus (20) according to claim 1, wherein the processor (90) executes the temperature raising process (S24) while traveling of the vehicle (10) is stopped.

5. The driving apparatus (20) according to claim 1, further comprising a second electric motor (30R) that includes multi-phase coils (35U, 35V, 35W) and is configured to rotate a driving wheel of the vehicle (10).

6. The driving apparatus (20) according to claim 5, wherein the first electric motor (30L) and the second electric motor (30R) are configured to rotate a common drive shaft.

7. The driving apparatus (20) according to claim 5, further comprising a second electric power conversion device (40R) electrically connected to the second electric motor (30R), wherein
the second electric motor (30R) and the second electric power conversion device (40R) constitute a charging circuit (11) configured to supply electric power of an external power source to a battery (3) of the vehicle (10) through a neutral point (NP2) of the second electric motor (30R), and
the processor (90) is configured to execute the temperature raising process (S24) in accordance with charging of the battery (3) through the charging circuit (11).

8. The driving apparatus (20) according to claim 7, wherein the processor (90) is configured to execute the temperature raising process (S24) in at least a part of a charging period in which the battery (3) is charged by the charging circuit (11).

9. The driving apparatus (20) according to claim 7, wherein the processor (90) is configured to determine timing to start the execution of the temperature raising process (S24) in accordance with a scheduled start-of-use time of the vehicle (10).

10. The driving apparatus (20) according to claim 7, wherein the processor (90) is configured to determine timing to finish the execution of the temperature raising process (S24) in accordance with a scheduled start-of-use time of the vehicle (10).

11. The driving apparatus (20) according to claim 5, wherein the processor (90) is configured to change a magnitude of the electric current to be passed through the multi-phase coils (35U, 35V, 35W) of the first electric motor (30L) in accordance with a temperature difference between the first electric motor (30L) and the second electric motor (3 0R).

12. The driving apparatus (20) according to claim 1, wherein
the vehicle (10) further includes a heating medium circuit (16) configured to circulate a heating medium, and
the heating medium circuit (16) circulates the heating medium at least between the first electric motor (30L) and a battery (3) of the vehicle (10) in the temperature raising process (S24).
